# EUROPÄISCHE PATENTSCHRIFT

(11) **EP 2 336 662 B1**
(45) Veröffentlichungstag und Bekanntmachung des Hinweises auf die Patenterteilung: **04.09.2019**
(21) Anmeldenummer: 10015356.8
(22) Anmeldetag: 07.12.2010
(51) Int. Cl.: F24F 13/02, F16L 25/00, F16L 25/12

(54) **Verbindungselement zum Verbinden zweier Lüftungskanäle**
Connection element for connecting two ventilation channels
Elément de liaison pour relier deux canaux d'aération

(30) Priorität: 11.12.2009 DE 202009016748 U
(43) Veröffentlichungstag der Anmeldung: 22.06.2011
(73) Patentinhaber: Actovent GmbH, 70188 Stuttgart (DE)
(72) Erfinder: Ortwein, Moritz, 73033 Göppingen (DE)
(74) Vertreter: Ruckh, Rainer Gerhard

(56) Entgegenhaltungen:
- DE-A1- 3 005 790
- DE-A1- 19 728 655
- US-A- 3 229 998
- US-A- 3 432 185

## Beschreibung

Die Erfindung betrifft ein Verbindungselement zum Verbinden zweier Lüftungskanäle.

Derartige Lüftungskanäle werden allgemein in Gebäuden installiert, um einen Lufttransport innerhalb eines Gebäudes zu gewährleisten. Dabei können die Lüftungskanäle Bestandteile von Klimaanlagen, Luftheizungen, Wärmetauscheranlagen und dergleichen sein, wobei die Lüftungskanäle für eine Zufuhr von Frischluft oder eine Ausleitung von Abluft genutzt werden können.

Bei derartigen Systemen werden im Allgemeinen sehr lange Kanalsysteme benötigt, so dass bei deren Installation stets mehrere Lüftungskanäle miteinander verbunden werden müssen. Bei bekannten Systemen werden Steckverbindungen eingesetzt, das heißt die längsseitigen Enden zweier zu verbindender Lüftungskanäle sind komplementär ausgebildet, so dass diese ineinander gesteckt werden können. Bei anderen bekannten Systemen werden die Lüftungskanäle durch Muffen verbunden. Bei beiden bekannten Systemen müssen die Verbindungen zwischen den Lüftungskanälen durch Schraubverbindungen stabilisiert werden. Dies erfordert den Einsatz von Werkzeugen, so dass die Herstellung der Verbindungen unerwünscht aufwändig ist. Dies gilt insbesondere dann, wenn die Lüftungskanäle an einer Decke eines Gebäudes über Kopf montiert werden müssen.

Weiterhin ist nachteilig, dass die so hergestellten Verbindungen zwischen Lüftungskanälen nicht luftdicht sind. Um eine Luftdichtigkeit zu erzielen, müssen die Verbindungsstellen mit Klebeband umwickelt werden. Das nachträgliche Anbringen dieser Dichtmittel erhöht den Aufwand bei der Installation der Lüftungskanäle noch weiter, wobei insbesondere auch hier die Installation der Lüftungskanäle an Decken äußerst umständlich und zeitaufwändig ist.

Die DE 197 28 655 A1 betrifft eine Stoßverbindung von aneinanderliegenden Enden zweier Abschnitte eines dünnwandigen Luftkanalrohres aus Blech mit kreisförmigem Querschnitt. Die Enden weisen jeweils einen von der Rohrwand etwa senkrecht abstehenden Ringbord auf, wobei die Ringborde durch einen elastischen Spannring gegeneinander gezogen sind, der außen im wesentlichen U-Profil besitzt. An die inneren, zur Wand der Luftkanalabschnitte hin weisenden Ränder der beiden Schenkel des U-Profils ist jeweils ein schräg ins Innere des U-Profils gebogener Spannsteg angeformt. Der kleinste Abstand zwischen den Spannstegen ist im losen Zustand des Spannrings gleich der oder geringfügig kleiner als die doppelte Stärke eines Ringbords. Durch die elastische Kraft der Spannstege und des U-Profils zieht der Spannring die Ringborde ohne axiales Spiel fest aneinander.

Der Erfindung liegt die Aufgabe zugrunde, ein Verbindungselement der eingangs genannten Art bereitzustellen, mittels dessen schnell und auf konstruktiv einfache Art eine dichte Verbindung zwischen zwei Lüftungskanälen hergestellt werden kann.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Verbindungselement dient zum Verbinden zweier Lüftungskanäle und umfasst einen Grundkörper und einen Deckel. Der Deckel ist auf der offenen Oberseite des Grundkörpers aufsetzbar und werkzeuglos mit diesem reversibel lösbar verbindbar. Das so gebildete Verbindungselement umschließt die Lüftungskanäle an ihrer Nahtstelle. An den Innenseiten des Grundkörpers und des Deckels sind Dichtmassen vorgesehen, mittels derer die Nahtstelle zwischen den Lüftungskanälen über ihre_gesamte Länge abgedichtet ist. Der Grundkörper weist einen Boden und zwei von diesem hervorstehende, in Abstand gegenüberliegende Seitenwände auf. Der Deckel ist auf die oberen Ränder der Seitenwände aufrastbar.

Ein wesentlicher Vorteil des erfindungsgemäßen Verbindungselements besteht darin, dass allein durch Aufsetzen des Deckels auf den Grundkörper, in welchem die Lüftungskanäle mit ihren längsseitigen Rändern gegenüberliegend angeordnet sind, eine feste und luftdichte Verbindung der Lüftungskanäle erzielt wird. Die Verbindung zwischen Grundkörper und Deckel kann dabei werkzeuglos hergestellt werden, wobei besonders vorteilhaft eine Rastverbindung zwischen Grundkörper und Deckel vorgesehen ist. Die Verbindung zwischen den Lüftungskanälen durch das Verbindungselement kann somit schnell, einfach und auch an schwierigen Einbaupositionen wie an Decken von Gebäuden, problemlos hergestellt werden.

Wesentlich hierbei ist weiterhin, dass durch die Dichtmassen an den Innenseiten des Grundkörpers und des Deckels die Nahtstelle zwischen den Lüftungskanälen über ihre gesamte Länge durch die Dichtmassen luftdicht abgedichtet ist. Damit sind keine weiteren Dichtmittel zur Herstellung einer luftdichten Verbindung nötig. Der Konstruktions- und Montageaufwand zur Herstellung der luftdichten Verbindung kann somit äußerst gering gehalten werden.

Weiterhin ist vorteilhaft, dass durch den Anpressdruck, den das fertig montierte Verbindungselement auf die Lüftungskanäle ausübt, eine stabile Verbindung zwischen den Lüftungskanälen erzielt wird, so dass der Einsatz weiterer Befestigungsmittel nicht erforderlich ist. Prinzipiell kann der Halt der Lüftungskanäle im Verbindungselement dadurch erhöht werden, dass die Lüftungskanäle im Bereich ihrer längsseitigen Ränder Auswölbungen aufweisen, mittels derer der Anpressdruck gegen das Verbindungselement erhöht ist.

Schließlich ist vorteilhaft, dass die Verbindung zwischen Grundkörper und Deckel zur Ausbildung des Verbindungselements nicht nur einfach und werkzeuglos hergestellt, sondern auch wieder gelöst werden kann, so dass das Verbindungselement mehrfach genutzt werden kann.

Da die Verbindung zwischen Grundkörper und Deckel eine Rastverbindung ist, kann diese konstruktiv einfach derart ausgebildet sein, dass an den miteinander in Eingriff stehenden Rändern des Grundkörpers und des Deckels Querschnittsverbreiterungen und/oder Laschen vorgesehen sind, mittels derer eine sichere Rastverbindung realisiert werden kann. Besonders vorteilhaft sind diese Querschnittsverbreiterungen oder Laschen durch umgebogene Randsegmente des Grundkörpers und des Deckels gebildet, wobei der Grundkörper und der Deckel vorteilhaft aus einem metallischen Werkstoff besteht. Bei derartigen Metallteilen können die Biegevorgänge zur Erstellung der Laschen und Querschnittsverbreiterungen schnell, präzise und kostengünstig durchgeführt werden.

Die Dichtmasse, die bevorzugt aus elastischem Material besteht, kann auf den Innenseiten des Grundkörpers und des Deckels einfach und schnell durch Aufspritzen einer entsprechenden Masse erfolgen. Alternativ kann die Dichtmasse als bandförmiges Material ausgebildet sein. Dieses kann beispielsweise durch Klebestellen einfach an den Innenseiten des Grundkörpers und des Deckels fixiert werden.

Das erfindungsgemäße Verbindungselement umschließt einen Hohlraum, der an die Außenkonturen der Lüftungskanäle angepasst ist. Besonders vorteilhaft weist der Hohlraum einen rechteckigen Querschnitt auf.

Damit brauchen die Lüftungskanäle nicht an einer bestimmten Stelle innerhalb des Verbindungselements mit aneinander dicht anliegenden Rändern positioniert werden um die Verbindung durch das Verbindungselement herstellen zu können. Vielmehr können die Lüftungskanäle auch in Abstand zueinander liegend mit dem Verbindungselement verbunden werden. Auch können die Positionen der gegenüber liegenden Ränder der Lüftungskanäle variieren, solange diese noch innerhalb des Verbindungselements liegen. In all diesen Fällen wird durch die Dichtmassen an den Innenseiten des Grundkörpers und des Deckels eine luftdichte Verbindung zwischen den Lüftungskanälen gewährleistet.

In einer vorteilhaften Ausgestaltung weist das Verbindungselement ein Auflageelement auf, auf welchem der Grundkörper aufsitzt, wobei das Auflageelement an einer Auflagefläche fixierbar ist.

Besonders vorteilhaft ist das Auflageelement von einer Platte gebildet, auf welcher der Boden des Grundkörpers aufsitzt. In Segmenten des Auflageelements, die über den Grundkörper hervorstehen, sind Bohrungen eingearbeitet, in welche Befestigungsmittel zur Fixierung an der Auflagefläche einführbar sind.

Dies führt zu einer weiteren Vereinfachung der Installation von über das Verbindungselement verbundenen Lüftungskanälen in Gebäuen und dergleichen. Der Grundkörper mit den daran angeordneten Auflageelementen kann in einem ersten Montageschritt an einer Wand, einem Boden oder einer Decke eines Gebäudes montiert werden, indem das Auflageelement mittels der Befestigungsmittel an der jeweiligen Auflagefläche fixiert wird. Dann brauchen nur noch die beiden Lüftungskanäle mit ihren beiden Randsegmenten in den Grundkörper eingelegt und der Deckel auf dem Grundkörper aufgesetzt, vorzugsweise aufgerastet werden.

Das so ausgebildete Verbindungselement kann vorteilhaft auch ein Stützelement für einen einzelnen Lüftungskanal bilden. Damit ist eine Mehrfachnutzung des erfindungsgemäßen Verbindungselements gegeben.

Die Erfindung wird im Folgenden anhand der Zeichnungen erläutert. Es zeigen:
- Figur 1:: Zwei über ein Verbindungselement verbundene Lüftungskanäle.
- Figur 2:: Einzeldarstellung des Verbindungselements mit einem auf einen Grundkörper aufgesetzten Deckel.
- Figur 3:: Einzeldarstellung des Verbindungselements mit von dem Grundkörper abgenommenen Deckel.
- Figur 4:: Schnittdarstellung des Grundkörpers mit daran angebrachten Auflageelementen.

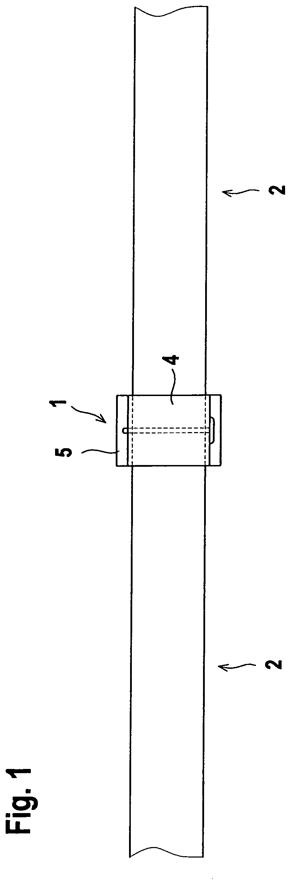

Figur 1 zeigt eine Anordnung zweier über ein Verbindungselement 1 verbundener Lüftungskanäle 2. Die so miteinander verbundenen Lüftungskanäle 2 bilden ein Kanalsystem als Bestandteil einer Klimaanlage, einer Luftheizung, einer Wärmetauscheranlage oder dergleichen und dienen insbesondere zur Zufuhr von Frischluft und zur Ausleitung von Abluft in der jeweiligen Anlage.

Die Lüftungskanäle 2 weisen im vorliegenden Fall jeweils identische rechteckige Querschnitte auf und bestehen aus metallischen Werkstoffen, wie zum Beispiel verzinktem Stahl oder auch Edelstahl.

Wie aus Figur 1 ersichtlich, werden die Lüftungskanäle 2 koaxial so angeordnet, dass deren längsseitige Ränder in geringem Abstand gegenüber liegen, so dass dann mit dem Verbindungselement 1 eine luftdichte Verbindung zwischen den beiden Lüftungskanälen 2 hergestellt werden kann. Generell kann die Ausrichtung auch derart erfolgen, dass die Lüftungskanäle 2 mit ihren längsseitigen Rändern aneinander anliegen.

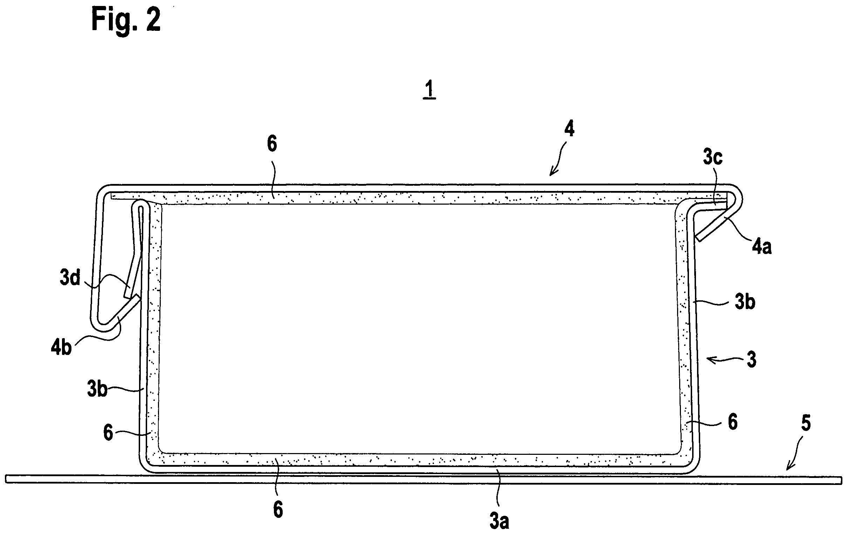

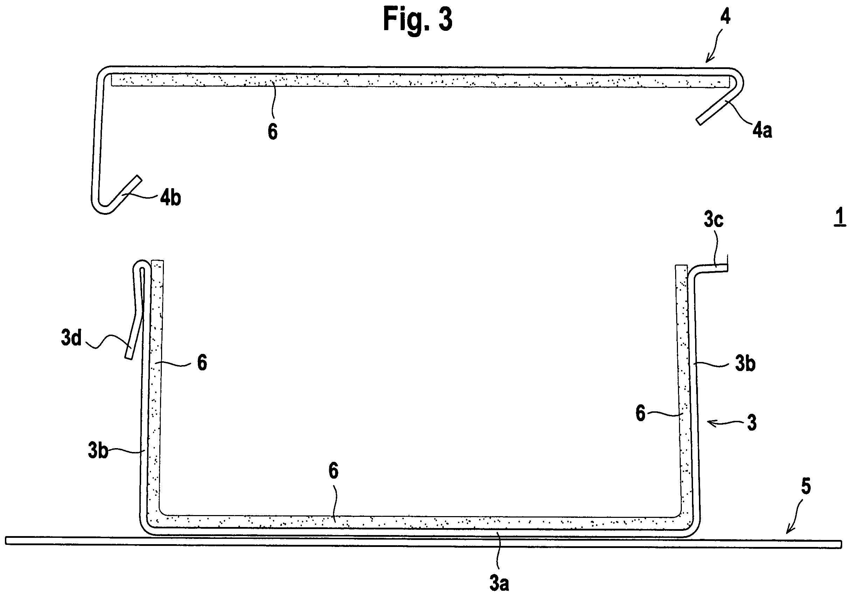

Das Verbindungselement 1 mit seinen Komponenten ist in den Figuren 2 und 3 dargestellt. Wie aus diesen Darstellungen ersichtlich, weist das Verbindungselement 1 einen Grundkörper 3 und einen auf den Grundkörper 3 aufrastbaren Deckel 4 auf. Weiterhin ist an der Unterseite des Grundkörpers 3 ein Auflageelement 5 befestigt, dessen Ränder seitlich über den Grundkörper 3 hervorstehen. Der Grundkörper 3, der Deckel 4 und das Auflagesegment bestehen aus einem metallischen Werkstoff, insbesondere aus verzinktem Stahl oder aus Edelstahl.

Der Grundkörper 3 weist einen in einer Ebene verlaufenden Boden 3a auf, welcher eine rechteckige Kontur aufweist. Von gegenüberliegenden Rändern stehen senkrecht zwei Seitenwände 3b des Grundkörpers 3 hervor, die parallel zueinander orientiert sind. Die oberen Ränder der Seitenwände 3b sind gebogen, wodurch generell Querschnittsverbreiterungen gebildet werden, die Rastmittel für das Aufrasten des Deckels 4 bilden. An einer Seitenwand 3b ist durch den Biegevorgang ein senkrecht von der Seitenwand 3b abstehender Vorsprung 3c gebildet. An der anderen Seitenwand 3b ist der obere Rand vollständig umgebogen, so dass ein Randsegment 3d gebildet wird, das im Wesentlichen dicht an der Seitenwand 3b anliegt, wobei jedoch der untere Rand des Randsegments 3d etwas von der Seitenwand 3b absteht.

Der Deckel 3 weist eine im Wesentlichen dem Boden 3a des Grundkörpers 3 entsprechende rechteckige Grundfläche auf, wobei an gegenüberliegenden Rändern des Deckels 3 zur Unterseite hin ausmündende Laschen 4a, 4b vorgesehen sind.

Zum Aufrasten des Deckels 4 auf dem Grundkörper 3 wird zunächst ein Ende des Deckels 4 so auf den Grundkörper 3 aufgesetzt, dass die Lasche 4a den Vorsprung 3c hintergreift. Dann wird von oben auf das andere Ende des Deckels 4 aufgedrückt, so dass die Lasche 4b am unteren Rand des Randsegments 3d, wie in Figur 2 dargestellt, einrastet. Damit ist der Deckel 4 am Grundkörper 3 werkzeuglos befestigt, wobei die Rastverbindung bei Bedarf jederzeit wieder gelöst werden kann.

Wie aus Figur 2 ersichtlich, umschließen der Boden 3a und die Seitenwände 3b des Grundkörpers 3 mit dem aufgesetzten Deckel 4 einen Hohlraum mit rechteckigem Querschnitt, wobei der Hohlraum an den offenen Längsseiten des so gebildeten Verbindungselements 1 frei ausmündet. Der Querschnitt des Hohlraums ist an den Querschnitt der Lüftungskanäle 2 so angepasst, dass das geschlossene Verbindungselement 1 mit einem Anpressdruck an den Außenseiten der Lüftungskanäle 2 anliegt, so dass diese in der in Figur 1 dargestellten Position lagefixiert sind. Der Halt der Lüftungskanäle 2 am Verbindungselement 1 kann dadurch noch verbessert werden, dass in den Randbereichen der Lüftungskanäle 2, die zum Verbindungselement 1 umschlossen sind, nach außen hervorstehende Auswölbungen vorgesehen sind. Diese Auswölbungen können als Sicken an den Oberseiten der Lüftungskanäle 2 ausgebildet sein, deren Längsachsen quer zu den Längsachsen der Lüftungskanäle 2 verlaufen.

Wie aus den Figuren 2 und 3 ersichtlich, sind die Innenseiten des Deckels 4 und die Innenseiten des Bodens 3a und der Seitenwände 3b mit einer Dichtmasse 6 ausgekleidet, die zumindest teilweise aus einem elastischen Material besteht. Die so ausgebildete Dichtungsschicht weist eine homogene Dicke auf. Die Dichtmasse 6 kann auf die Innenseiten aufgespritzt sein. Alternativ kann die Dichtmasse 6 als bandförmiges Material gebildet sein, das auf den Innenseiten aufgeklebt wird.

Mit der Montage des Verbindungselements 1 an den Lüftungskanälen 2 wird durch die Dichtmasse 6 die Nahtstelle zwischen den Lüftungskanälen 2 vollständig abgedichtet. Da mit der Dichtmasse 6 der gesamte Innenraum des Verbindungselements 1 abgedeckt ist, wird mit dem Verbindungselement 1 ein sicherer luftdichter Verschluss der Nahtstelle zwischen den Lüftungskanälen 2 unabhängig davon erhalten, ob die die Ränder der Lüftungskanäle 2 im Verbindungselement 1 aneinander stoßen oder in geringem Abstand zueinander liegen. Weiter kann auch die Position der Nahtstelle zwischen den Lüftungskanälen 2 innerhalb des Verbindungselements 1 variieren. Solange die Nahtstelle vollständig innerhalb des Verbindungselements 1 liegt, ist ein luftdichter Abschluss der Nahtstelle durch die Verbindungselemente 1 gewährleistet.

Das Auflageelement 5, auf welchem der Grundkörper 3 aufsitzt, ist von einer rechteckigen Platte gebildet, die in einer Ebene verläuft. Der Grundkörper 3 ist auf dem Auflageelement 5 durch Schweiß-, Nietverbindungen oder dergleichen befestigt.

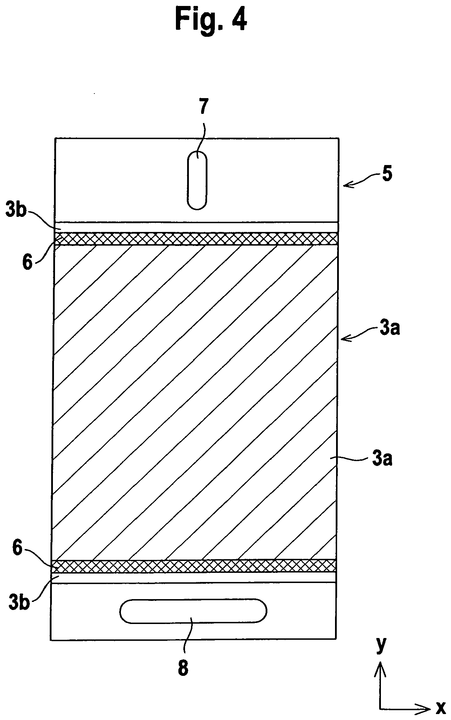

Figur 4 zeigt einen Schnitt durch den Grundkörper 3 in halber Höhe der Seitenwände 3b des Grundkörpers 3 mit Blick auf die Oberseite des Auflageelements 5. Wie aus Figur 4 ersichtlich, weist das Auflageelement 5 dieselbe Länge, das heißt Ausdehnung in x-Richtung, in welcher die Längsachen der zu verbindenden Lüftungskanäle 2 verlaufen, auf, während das Auflageelement 5 jedoch eine größere Breite, das heißt Ausrichtung in y-Richtung als der Grundkörper 3 aufweist.

In die über den Grundkörper 3 hervorstehenden Segmente des Auflageelements 5 ist jeweils eine Bohrung in Form eines Langlochs 7, 8 eingearbeitet. Die Längsachsen der Langlöcher 7, 8 verlaufen im rechten Winkel zueinander. Durch die Langlöcher 7, 8 können Befestigungsmittel wie Schrauben geführt werden, um das Auflageelement 5 auf einer Auflagefläche, die von einer Wand, einer Decke oder einem Fußboden eines Gebäudes gebildet sein kann, zu befestigen.

Zur Montage von Lüftungskanälen 2 kann dann der Grundkörper 3 mit dem Auflageelement 5 zunächst an einer derartigen Auflagefläche fixiert werden. Dann werden die zu verbindenden Lüftungskanäle 2 mit ihren längsseitigen Rändern aneinander angrenzend in den offenen Grundkörper 3 eingelegt. Schließlich wird der Deckel 4 auf den Grundkörper 3 aufgerastet, so dass die Lüftungskanäle 2 im Verbindungselement 1 lagefixiert sind, wobei gleichzeitig durch die Dichtmasse 6 ein luftdichter Verschluss der Nahtstelle zwischen den Lüftungskanälen 2 erhalten wird.

### Bezugszeichenliste

- (1): Verbindungselement
- (2): Lüftungskanal
- (3): Grundkörper
- (3a): Boden
- (3b): Seitenwand
- (3c): Vorsprung
- (3d): Randsegment
- (4): Deckel
- (4a): Lasche
- (4b): Lasche
- (5): Auflageelement
- (6): Dichtmasse
- (7): Langloch
- (8): Langloch

## Patentansprüche

1. Verbindungselement (1) zum Verbinden zweier Lüftungskanäle (2), umfassend einen Grundkörper (3) und einen Deckel (4), wobei der Deckel (4) auf der offenen Oberseite des Grundkörpers (3) aufsetzbar und werkzeuglos mit diesem reversibel lösbar verbindbar ist, wobei das so gebildete Verbindungselement (1) die Lüftungskanäle (2) an ihrer Nahtstelle umschließt, und wobei an den Innenseiten des Grundkörpers (3) und des Deckels (4) Dichtmassen (6) vorgesehen sind, mittels derer die Nahtstelle zwischen den Lüftungskanälen (2) über ihre gesamte Länge abgedichtet ist, **dadurch gekennzeichnet, dass** der Grundkörper (3) einen Boden (3a) und zwei von diesem hervorstehende, in Abstand gegenüberliegende Seitenwände (3b) aufweist, wobei der Deckel (4) auf die oberen Ränder der Seitenwände (3b) aufrastbar ist.

2. Verbindungselement nach Anspruch 1, **dadurch gekennzeichnet, dass** an den oberen Rändern der Seitenwände (3b) des Grundkörpers (3) Querschnittsverbreiterungen vorgesehen sind, welche bei Aufrasten des Deckels (4) von an dessen Rändern vorgesehenen Laschen (4a, 4b) hintergriffen sind, wobei sowohl die Querschnittsverbreiterungen als auch die Laschen (4a, 4b) durch umgebogene Randsegmente (3d) des Deckels (4) gebildet sind.

3. Verbindungselement nach einem der Ansprüche 1 oder 2, **dadurch gekennzeichnet, dass** der Grundkörper (3) und der Deckel (4) aus einem metallischen Werkstoff bestehen.

4. Verbindungselement nach einem der Ansprüche 1 oder 3, **dadurch gekennzeichnet, dass** dieses einen Hohlraum mit einem insbesondere rechteckigen Querschnitt umschließt, der an die Außenkonturen der Lüftungskanäle (2) angepasst ist.

5. Verbindungselement nach einem der Ansprüche 1 bis 4, **dadurch gekennzeichnet, dass** der gesamte Hohlraum mit Dichtmasse (6) ausgekleidet ist.

6. Verbindungselement nach einem der Ansprüche 1 bis 5, **dadurch gekennzeichnet, dass** die Dichtmasse (6) auf die Innenseiten des Grundkörpers (3) und des Deckels (4) aufgespritzt ist, oder dass die Dichtmasse (6) in Form von Bändern gebildet ist, welche durch Klebestellen an den Innenseiten des Grundkörpers (3) und des Deckels (4) fixierbar sind.

7. Verbindungselement nach einem der Ansprüche 1 bis 6, **dadurch gekennzeichnet, dass** die Dichtmasse (6) zumindest teilweise aus elastischem Material besteht.

8. Verbindungselement nach einem der Ansprüche 1 bis 7, **dadurch gekennzeichnet, dass** mit diesem verbundene Lüftungskanäle (2) mit ihren längsseitigen Rändern aneinander stoßen und so die Nahtstelle bilden.

9. Verbindungselement nach einem der Ansprüche 1 bis 8, **dadurch gekennzeichnet, dass** mit diesem verbundene Lüftungskanäle (2) mit ihren längsseitigen Rändern in Abstand zueinander liegen, wobei die dadurch gebildete Nahtstelle vollständig innerhalb des Verbindungselements (1) liegt.

10. Verbindungselement nach einem der Ansprüche 1 bis 9, **dadurch gekennzeichnet, dass** dieses ein Auflageelement (5) aufweist, auf welchem der Grundkörper (3) aufsitzt, wobei das Auflageelement (5) an einer Auflagefläche fixierbar ist, wobei das Auflageelement (5) von einer Platte gebildet ist, auf welcher der Boden (3a) des Grundkörpers (3) aufsitzt.

11. Verbindungselement nach Anspruch 10, **dadurch gekennzeichnet, dass** in Segmenten des Auflageelements (5), die über den Grundkörper (3) hervorstehen, Bohrungen eingearbeitet sind, in welche Befestigungsmittel zur Fixierung an der Auflagefläche einführbar sind.

12. Verbindungselement nach einem der Ansprüche 1 bis 11, **dadurch gekennzeichnet, dass** die Lüftungskanäle (2) im Bereich ihrer längsseitigen Ränder Auswölbungen aufweisen, mittels derer der Anpressdruck gegen das Verbindungselement (1) erhöht ist.

13. Verbindungselement nach einem der Ansprüche 1 bis 12, **dadurch gekennzeichnet, dass** dieses ein Stützelement für einen einzelnen Lüftungskanal (2) bildet.

## Claims

1. Connecting element (1) for connecting two ventilation channels (2), comprising a base body (3) and a cover (4), wherein the cover (4) is placeable on the open upper side of the base body (3) and reversibly connectible therewith without tools, wherein the thus-formed connecting element (1) encloses the ventilation channels (2) at the seam position thereof and wherein provided at the inner sides of the base body (3) and the cover (4) are sealing materials (6) by means of which the seam position between the ventilation channels (2) is sealed off over its entire length, **characterised in that** the base body (3) has a base (3a) and two side walls (3b) which project therefrom and are opposite at a spacing, wherein the cover (4) can be detented on the upper edges of the side walls (3b).

2. Connecting element according to claim 1, **characterised in that** provided at the upper edges of the side walls (3b) of the base body (3) are cross-sectional widenings behind which, when the cover (4) is detented in place, engage straps (4a, 4b) provided at the edges of the cover, wherein not only the cross-sectional widenings, but also the straps (4a, 4b) are formed by bent-around edge segments (3d) of the cover (4).

3. Connecting element according to one of claims 1 and 2, **characterised in that** the base body (3) and the cover (4) consist of a metallic material.

4. Connecting element according to one of claims 1 and 3, **characterised in that** this encloses a cavity with a cross-section which is, in particular, rectangular and which is adapted to the outer contours of the ventilation channels (2).

5. Connecting element according to any one of claims 1 to 4, **characterised in that** the entire cavity is lined with sealing material (6).

6. Connecting element according to any one of claims 1 to 5, **characterised in that** the sealing material (6) is sprayed on the inner sides of the base body (3) and the cover (4) or that the sealing material (6) is formed in the form of tapes fixable by adhesive locations to the inner sides of the base body (3) and the cover (4).

7. Connecting element according to any one of claims 1 to 6, **characterised in that** the sealing material (6) consists at least partly of resilient material.

8. Connecting element according to any one of claims 1 to 7, **characterised in that** ventilation channels (2) connected therewith abut one another by the longitudinal-side edges thereof and thus form the seam position.

9. Connecting element according to any one of claims 1 to 8, **characterised in that** ventilation channels (2) connected therewith lie with the longitudinal-side edges thereof at a spacing from one another, wherein the thereby-formed seam position lies completely within the connecting element (1).

10. Connecting element according to any one of claims 1 to 9, **characterised in that** this comprises a support element (5) on which the base body (3) is seated, wherein the support element (5) is fixable to a support surface, and wherein the support element (5) is formed by a plate on which the base (3a) of the base body (3) sits.

11. Connecting element according to claim 10, **characterised in that** bores into which fastening means for fixing to the support surface are introducible are formed in segments, which project beyond the base body (3), of the support element (5).

12. Connecting element according to any one of claims 1 to 11, **characterised in that** the ventilation channels (2) have in the region of the longitudinal-side edges thereof bulges by means of which the pressing pressure against the connecting element (1) is increased.

13. Connecting element according to any one of claims 1 to 12, **characterised in that** this forms a support element for an individual ventilation channel (2).

## Revendications

1. Elément de liaison (1) réalisé pour relier deux canaux de ventilation (2), comprenant un corps d'embase (3) et un couvercle (4), lequel couvercle (4) peut être mis en place sur la face supérieure ouverte dudit corps d'embase (3) auquel il peut être relié, sans outil, de manière réversible et libérable, sachant que l'élément de liaison (1) ainsi formé ceinture lesdits canaux de ventilation (2) au niveau de leur zone de jonction, et sachant que des masses d'étanchement (6), au moyen desquelles ladite zone de jonction entre lesdits canaux de ventilation (2) est rendue étanche sur l'intégralité de sa longueur, sont prévues au niveau des faces intérieures dudit corps d'embase (3) et dudit couvercle (4), **caractérisé par le fait que** le corps d'embase (3) est muni d'un fond (3a) et de deux parois latérales (3b) opposées à distance, se dressant à partir dudit fond, le couvercle (4) pouvant être encliqueté sur les bords supérieurs desdites parois latérales (3b).

2. Elément de liaison selon la revendication 1, **caractérisé par le fait que** des élargissements de section transversale, prévus au niveau des bords supérieurs des parois latérales (3b) du corps d'embase (3), sont emprisonnés par-derrière, lors de l'encliquetage du couvercle (4), par des pattes (4a, 4b) prévues sur les bords de celui-ci, lesdits élargissements de section transversale, de même que lesdites pattes (4a, 4b), étant formés par des segments marginaux coudés (3d) dudit couvercle (4).

3. Elément de liaison selon l'une des revendications 1 ou 2, **caractérisé par le fait que** le corps d'embase (3) et le couvercle (4) sont constitués d'un matériau métallique.

4. Elément de liaison selon l'une des revendications 1 ou 3, **caractérisé par le fait que** ce dernier ceinture une cavité munie d'une section transversale notamment rectangulaire, qui est adaptée aux profils extérieurs des canaux de ventilation (2).

5. Elément de liaison selon l'une des revendications 1 à 4, **caractérisé par le fait que** l'intégralité de la cavité est doublée par de la masse d'étanchement (6).

6. Elément de liaison selon l'une des revendications 1 à 5, **caractérisé par le fait que** la masse d'étanchement (6) est pulvérisée sur les faces intérieures du corps d'embase (3) et du couvercle (4) ; ou **par le fait que** ladite masse d'étanchement (6) revêt la forme de bandes pouvant être consignées à demeure, par des zones adhésives, au niveau desdites faces intérieures dudit corps d'embase (3) et dudit couvercle (4).

7. Elément de liaison selon l'une des revendications 1 à 6, **caractérisé par le fait que** la masse d'étanchement (6) est au moins partiellement constituée d'un matériau élastique.

8. Elément de liaison selon l'une des revendications 1 à 7, **caractérisé par le fait que** des canaux de ventilation (2), reliés à l'aide de ce dernier, sont mutuellement aboutés par leurs bords longitudinaux et forment, de la sorte, la zone de jonction.

9. Elément de liaison selon l'une des revendications 1 à 8, **caractérisé par le fait que** des canaux de ventilation (2), reliés à l'aide de ce dernier, sont mutuellement espacés par leurs bords longitudinaux, la zone de jonction ainsi formée étant intégralement située à l'intérieur dudit élément de liaison (1).

10. Elément de liaison selon l'une des revendications 1 à 9, **caractérisé par le fait que** ce dernier est pourvu d'un élément d'appui (5) sur lequel le corps d'embase (3) repose, lequel élément d'appui (5) peut être assujetti à une surface d'appui, ledit élément d'appui (5) étant constitué d'une platine sur laquelle repose le fond (3a) dudit corps d'embase (3).

11. Elément de liaison selon la revendication 10, **caractérisé par le fait que** des perçages, dans lesquels peuvent être insérés des moyens de fixation dévolus à l'assujettissement à la surface d'appui, sont pratiqués dans des segments de l'élément d'appui (5) qui font saillie au-delà du corps d'embase (3).

12. Elément de liaison selon l'une des revendications 1 à 11, **caractérisé par le fait que** les canaux de ventilation (2) sont munis, dans la région de leurs bords longitudinaux, de bombements ayant pour effet d'accroître la pression de contact contre ledit élément de liaison (1).

13. Elément de liaison selon l'une des revendications 1 à 12, **caractérisé par le fait que** ce dernier constitue un élément de soutien affecté à un canal de ventilation (2) individuel.
